# FASCICULE DE BREVET EUROPEEN

(11) **EP 1 165 665 B1**
(45) Date de publication et mention de la délivrance du brevet: **22.01.2003**
(21) Numéro de dépôt: 00906454.4
(22) Date de dépôt: 22.02.2000
(51) Int. Cl.: C08H 5/04, C08B 3/20, C08B 31/04

(54) **PROCEDE POUR CONFERER UN CARACTERE HYDROPHOBE A UNE MATIERE SOLIDE CELLULOSIQUE OU AMYLACEE**
VERFAHREN ZUR HYDROPHOBIERUNG VON FESTEM CELLULOSE- ODER STÄRKEMATERIAL
METHOD FOR MAKING A CELLULOSIC OR STARCHY MATERIAL HYDROPHOBIC

(30) Priorité: 23.02.1999 FR 9902221
(43) Date de publication de la demande: 02.01.2002
(73) Titulaire: INSTITUT NATIONAL POLYTECHNIQUE DE TOULOUSE (I.N.P.T.), 31000 Toulouse (FR)
(72) Inventeur: VACA-GARCIA, Carlos, F-31300 Toulouse (FR); GIRARDEAU, Samuel, F-31400 Toulouse (FR); DESCHAMPS, Gérald, F-31400 Toulouse (FR); NICOLAS, Didier, F-31770 Colomiers (FR); CARUEL, Hervé, F-31750 Escalquens (FR); BORREDON, Marie, Elisabeth, F-31170 Tournefeuille (FR); GASET, Antoine, F-31000 Toulouse (FR)
(74) Mandataire: Cabinet BARRE LAFORGUE & associés
(86) Numéro de dépôt international: FR0000440
(87) Numéro de publication internationale: WO00050492

(56) Documents cités:
- WO-A-98/01497
- MAREK SIKORA ET AL.: "Chemical starch modification in the field of microwaves. III Reaction of potato starch with carboxyamides and carboxylic esters." POLISH JOURNAL OF FOOD AND NUTRITION SCIENCES, vol. 6/47, no. 3, 1997, pages 25-30, XP002122506

## Description

L'invention concerne un procédé pour conférer un caractère hydrophobe à une matière cellulosique ou amylacée par estérification ou transestérification à l'aide d'un réactif gras. Par "matière cellulosique ou amylacée", on entend aussi bien une matière composée essentiellement de cellulose ou d'amidon qu'une matière comportant un mélange de cellulose ou amidon et d'autres composés (par exemple matière lignocellulosique telle que sciure de bois ou matière amylacée telle que grains de blé ou de maïs). La matière cellulosique ou amylacée peut provenir de sous-produits ou résidus d'origine végétale riches en cellulose ou en amidon, ou bien peut être constituée par de la cellulose pure ou de l'amidon pur.

Les matières cellulosiques ou amylacées sont de nature hydrophile, apte à absorber de grandes quantités d'eau. Cette propriété représente un défaut grave de ce type de matières dans de nombreuses applications où elles se trouvent en présence d'eau ou en atmosphère humide (par exemple pour la cellulose : panneaux de particules pour la construction ou l'ameublement, matériaux de calage pour le conditionnement ; pour l'amidon : film d'emballage). Par ailleurs, dans certaines applications, on recherche des substrats hydrophobes capables d'absorber des corps gras (dépollution d'eau) et le caractère hydrophile des matières cellulosiques exclut de ces applications les nombreux produits réalisés à base de cellulose. Les matières cellulosiques ou amylacées sont des matières premières abondantes, peu coûteuses, et la diminution de leur caractère hydrophile présente donc un intérêt économique essentiel.

Un moyen connu pour rendre hydrophobe une matière cellulosique ou amylacée consiste à greffer un corps gras sur ses fonctions alcools, et de nombreux procédés ont été proposés pour réaliser un tel greffage. Toutefois, les deux réactifs en présence (cellulose ou amidon et corps gras) sont des composés stables et peu réactifs, et la réaction de greffage exige des conditions très spécifiques, limitant le développement industriel de ce type de procédé.

Ainsi, le procédé le plus ancien consiste à utiliser comme corps gras un chlorure d'acide et à effectuer la réaction dans un mélange de solvants organiques (incluant de la pyridine) qui évite la dégradation de la cellulose ou de l'amidon par l'acide chlorhydrique formé (C.J. MALM et al., Aliphatic Acid Esters of Cellulose, Ind. Eng. Chem. Vol. 43, n° 3, p. 684-688, 1951 ; WOLFF, I.A. et al., the acylation of. Corn starch, amylose and amylopectine J. Am. Soc., 73 p. 346-349, 1951). Les solvants utilisés sont d'une grande efficacité mais sont onéreux, toxiques et difficiles à extraire du milieu réactionnel (surtout la pyridine). En outre, le chlorure d'acide est un réactif relativement coûteux.

Pour éviter l'utilisation du chloruré d'acide et des solvants précités, on a proposé d'autres procédés dans lesquels le corps gras utilisé est soit un acide gras soit un ester d'acide gras, la réaction étant effectuée dans des solvants organiques qui ont pour fonction soit de solubiliser la cellulose ou l'amidon afin que la réaction se déroule en milieu homogène (G. SAMARANAYAKE et W.G. GLASSER, Cellulose derivatives with low DS. I. A novel acylation system, Carbohydr.- Polym Vol 22, p. 1-7, 1993 : ROBERTS, H.J. : Non Degradative Reactions of Starch. dans "Starch Chemisty and technology" Ed. R.L. Whistler & t. F. Paschall, Academic Press, New York, Vol. 1, p. 439-493, 1965) : soit, dans le cas de la cellulose, d'imprégner celle-ci et de l'amener à gonfler pour permettre une meilleure diffusion du réactif (A.I. LATETIN et al., Use of the ester exchange reaction for the synthesis of cellulose stearates, Polymer Sci. USSR, Vol. 10, p. 761-766, 1968). Les solvants utilisés (mélange chlorure de lithium/diméthylacétamide, diméthylformamide, diméthylsulfoxyde) sont beaucoup moins toxiques que la pyridine mais présentent les mêmes défauts quant au coût et à la difficulté d'extraction en fin de synthèse.

Par ailleurs, les micro-ondes ont été utilisées dans certaines réactions d'estérification ou de transestérification s'effectuant en milieu réactif polaire liquide pour accélérer celles-ci. Le liquide polaire constituant le milieu réactif permet une absorption de l'énergie micro-onde et conduit, pour certaines réactions, à une meilleure cinétique. Dans les documents suivants, le milieu polaire est constitué par un mono-alcool (méthanol, octanol, octadécanol, butanol) et l'estérification ou la transestérification est effectuée en milieu liquide homogène en présence d'acide gras ou d'ester d'acide gras, en vue de fonctionnaliser le mono-alcool avec une bonne cinétique : M.S.F. Lie Ken Jie et al., "The use of a microwave oven in the chemical transformation of long. chain Fatty acid esters" LIPIDS, Vol 23, n° 4, p. 367-369, 1988 : A. LOUFY et al, "The synthesis of esters under microwave irradiation using dry-media conditions, Can. J. Chem., Vol.71, p. 90-95, 1993 ; F. CHEMAT et al., "esterification of stearic acid by isomeric forms of butanol in a microwave oven under homogeneous and heterogeneous reaction conditions" J. Chem. Soc., Perkin Trans. 2, 11. p. 2371-2374, 1997. Toutefois, ces documents ne fournissent aucun enseignement pour rendre hydrophobe des composés solides tels que la cellulose
ou l'amidon qui ne se présentent pas sous la forme de liquides polaires et ont des réactivités très différentes de celles des mono-alcools (grande stabilité, caractère peu réactif).

La publication : MAREK SIKORA et al. « Chemical starch modification in the field of microwaves. III. Reaction of potato starch with carboxyamides and carboxylic esters ». Pol. J. Food Nutr. Sec., Vol. 6/47, N° 3, p. 25-30, 1997, étudie l'acylation d'amidon en présence de carboxyamides et d'esters carboxyliques sous irradiation micro-ondes et montre que le résultat obtenu dépend fortement du choix du réactif utilisé et des conditions de réaction et que le traitement conduit à une dégradation de la chaîne polymère amylacée.

WO 98-01497 concerne des méthodes d'acétylation de fibres cellulosiques en présence d'anhydride acétique avec un apport énergétique ultrasonique, thermique ou micro-ondes. L'obtention d'un degré d'acétylation suffisant pour conduire à une hydrophobicité satisfaisante s'accompagne d'une dégradation des fibres.

En outre, le brevet GB 1.425.624 propose d'utiliser les micro-ondes pour estérifier et fonctionnaliser de l'amidon en lit fluidisé en vue d'en améliorer les propriétés rhéologiques. Les réactifs utilisés sont des acides à courtes chaînes connus pour présenter une grande efficacité dans les réactions d'estérification. Toutefois, le traitement de l'amidon réalisé par un tel procédé ne modifie pas son caractère hydrophobe lequel reste strictement inchangé.

En conclusion, le problème économiquement important consistant à rendre hydrophobe de la cellulose où de l'amidon en l'absence de tiers solvant est actuellement non résolu.

La présente invention se propose de résoudre ce problème et de fournir un procédé pour rendre hydrophobe une matière solide cellulosique ou amylacée à l'aide d'un réactif gras en l'absence de tiers solvant pendant la réaction (les seuls solvants de type éthanol susceptibles d'être utilisés étant des solvants courants mis en oeuvre, une fois la réaction effectuée, pour séparer la cellulose hydrophobée ou l'amidon hydrophobé du milieu réactionnel).

Un autre objectif est de réaliser cette hydrophobation en respectant la chaîne polymère cellulosique ou amylacée de façon à conserver intégralement les propriétés mécaniques de ces corps.

A cet effet, le procédé visé par l'invention pour conférer un caractère hydrophobe à une matière solide cellulosique ou amylacée est du type dans lequel on greffe un corps gras sur les fonctions alcools de la matière en présence d'un catalyseur basique. Selon la présente invention, on réalise le greffage (a) en mettant la matière solide cellulosique ou amylacée en suspension dans une phase liquide composée d'un acide gras ou ester d'acide gras ayant un
ou plusieurs groupements acyles possédant chacun au moins six atomes de carbone, (b) en agitant le milieu hétérogène en présence du catalyseur basique pour réaliser une mise en contact des phases, et (c) en soumettant le milieu hétérogène à une irradiation micro-ondes de façon à porter ledit milieu à une température comprise entre 150°C et 210°C pendant une durée comprise entre 30 secondes et 30 minutes.

Ainsi, le procédé de l'invention permet, en l'absence de tiers solvant, de faire réagir un corps solide à caractère peu réactif, avec un corps gras hydrophobe, à nombre de carbones moyen ou élevé, lequel est peu polaire et lui-même peu réactif. Cette réaction est inattendue pour de tels composés, surtout lorsque l'on sait que les micro-ondes sont absorbées essentiellement par les milieux polaires et que la réaction n'a pu être obtenue jusqu'à ce jour en l'absence d'un tiers solvant. Le résultat obtenu est difficile à expliquer à l'heure actuelle ; il semblerait que, dans le cas du milieu hétérogène concerné, les micro-ondes permettent, après amorçage de la réaction, un déroulement rapide de celle-ci grâce à une augmentation de la polarité du milieu réactionnel due à la production d'eau ou d'alcool par la réaction. Les expérimentations ont permis de constater que, en l'absence totale de solvant dans le milieu réactionnel, on parvient ainsi à estérifier ou transestérifier une proportion satisfaisante des fonctions alcool de la cellulose ou de l'amidon. Même si cette proportion est plus faible que celle obtenue avec les solvants, en particulier la pyridine, ce résultat est inattendu et remarquable compte tenu de l'échec enregistré jusqu'à l'heure actuelle pour réaliser une telle transformation de ces fonctions. Il convient de souligner que la proportion de fonctions estérifiées ou transestérifiées est suffisante pour donner à la masse entière de matière cellulosique ou amylacée traitée un caractère hydrophobe marqué.

La durée de réaction est très courte, de l'ordre de quelques minutes (alors que les procédés antérieurs en présence de tiers solvant exigent des durées de plusieurs heures), ce qui accroît encore le caractère inattendu du résultat obtenu. Compte tenu de cette courte durée de réaction et de l'absence de solvant dans le milieu réactif, le procédé de l'invention bénéficie d'une bonne rentabilité industrielle liée à la plus-value qu'apportent au produit traité ses propriétés hydrophobes. On constate en outre, que la chaîne cellulosique de la matière cellulosique ou amylacée de départ reste pratiquement intacte et que, seules, certaines fonctions alcool sont transformées. L'irradiation micro-ondes est avantageusement réalisée en deux phases successives : une phase de courte durée avec une densité de puissance absorbée au moins égale à 5 watts/cm³ afin de porter le milieu à la température de réaction, et une phase plus longue, avec une densité de puissance absorbée comprise entre 1 watt/cm³ et 4 watts/cm³ pendant une durée de réaction préférentiellement comprise entre 5 et 10 minutes. Pendant la réaction, la température du milieu est avantageusement régulée entre 180°C et 195°C. Ces paramètres garantissent un respect de la chaîne polymère, tout en conduisant à un bon taux de greffage (degré de substitution de l'ordre de 0,17).

Les matières cellulosiques traitées conformément à l'invention peuvent être utilisées pour la fabrication de matériaux de construction ou d'ameublement, ou matériaux de calage, susceptibles de demeurer en atmosphère humide ou aqueuse en conservant une bonne stabilité dimensionnelle. Ces matières cellulosiques hydrophobes peuvent également être utilisées pour absorber de façon sélective et rapide (100% de matière grasse en moins de 2 minutes) les corps gras contenus dans des mélanges et des solutions aqueuses (eaux souillées, effluents domestiques et industriels) ou bien dans des mélanges à l'état vapeur (vapeurs de cuisine, vapeurs industrielles) ou encore dans des matières solides. De plus, elles ont la propriété de pouvoir rompre des émulsions eau-matière grasse et même de travailler en continu car les matières grasses absorbées de l'émulsion peuvent coalescer dans le filtre et monter à la surface du mélange pour être récupérées en continu par écrémage. Les fibres cellulosiques traitées conformément à l'invention présentent également l'avantage d'être biodégradables et réutilisables pour une nouvelle absorption après extraction du corps gras sans perte significative de leur capacité d'absorption. Elles peuvent être utilisées également pour fabriquer des filtres de cigarettes capables de retenir plus sélectivement les goudrons et composés nicotinés à nature lipophile. Les matières cellulosiques sous forme de fils ou tissus traités selon ce procédé peuvent être utilisées pour la fabrication de tissus imperméables à l'eau. Par-ailleurs, les matières amylacées traitées conformément à l'invention peuvent être utilisées pour fabriquer des films d'emballage peu sensibles à l'humidité ou en tant qu'additif dans les industries alimentaires, pharmaceutiques et des peintures.

Elles peuvent être également utilisées comme support biodégradable de matière active, bénéficiant d'une durée de dégradation plus longue en atmosphère humide. La matière active peut être mélangée après la réaction d'estérification ou de transestérification en vue d'imprégner l'ester gras amylacé obtenu. Par exemple, l'ester gras amylacé peut servir de support d'herbicide ou de répulsif pour nuisibles : grâce à son caractère hydrophobe, une durée d'efficacité est plus longue en utilisation extérieure que si de l'amidon hydrophile était utilisé.

Selon un mode de mise en oeuvre préférentiel, on ajuste la quantité de réactif gras par rapport à la matière cellulosique ou amylacée dans une proportion correspondant- à une plage comprise entre 3 et 15 moles d'acide gras ou ester d'acide gras par équivalent OH de matière cellulosique ou amylacée. Cette proportion paraît favoriser le taux de greffage obtenu.

Dans le cas d'une hydrophobation par estérification, on utilise de préférence un ou des acides gras saturés comportant entre 8 et 12 atomes de carbone.

Dans le cas d'une hydrophobation par transestérification, on utilise avantageusement un ou des esters d'acide gras du groupe suivant : méthyl octanoate, méthyl décanoate, méthyl dodécanoate, méthyl tétradécanoate, méthyl hexadécanoate, méthyl octadécanoate, huiles végétales en particulier coprah ou palmiste.

Selon un mode de mise en oeuvre préféré, le catalyseur est utilisé sous forme solide et préalablement mélangé de façon homogène à l'acide gras ou à l'ester d'acide gras. On simplifie ainsi les manipulations, tout en facilitant les dosages. Le catalyseur est de préférence dosé de façon que la proportion pondérale catalyseur/matière cellulosique ou amylacée corresponde à une plage comprise entre 10⁻² et 10⁻⁴ mole de catalyseur par équivalent OH de matière cellulosique ou amylacée. On peut en particulier utiliser comme catalyseur un carboxylate.

Le procédé de l'invention permet de traiter les matières solides cellulosiques ou amylacées se présentant avec une teneur en humidité courante comprise entre 1,7.10⁻² et 7.10⁻² g d'eau par g de matière sèche.

Dans le cas de la matière cellulosique, il est possible d'améliorer l'efficacité de la réaction de greffage en favorisant la diffusion du réactif gras au coeur de la matière grâce à un traitement préalable consistant à mettre la matière cellulosique en présence d'un excès d'eau en vue de réaliser un gonflement des fibres, à déplacer l'eau absorbée au moyen d'un alcool et à déplacer ensuite l'alcool au moyen d'un acide gras ou ester d'acide gras identique à celui utilisé pour la réaction.

Le procédé de l'invention est illustré dans les exemples qui suivent.

### EXEMPLE 1 :

### 1) Phase solide :

La matière solide utilisée dans cette exemple est de la cellulose (fournie par "SIGMA" marque déposée) ayant un degré de polymérisation (D.P.) de 980 et un taux d'humidité de 7% (7,10⁻² g d'eau par g de matière sèche).

### 2) Pré-traitement :

La cellulose subit un traitement préalable consistant à la mettre en présence d'un excès d'eau (deux lavages successifs, chacun au moyen de 20 ml d'eau par g de cellulose) en vue de réaliser un gonflement des fibres, à déplacer l'eau absorbée par de l'éthanol (2 lavages à l'éthanol avec les mêmes proportions que les lavages à l'eau) puis à déplacer ensuite cet alcool au moyen de l'acide caprylique (acide octanoique) identique à celui utilisé pour la réaction (2 lavages à l'acide avec les proportions précitées).

La cellulose ainsi traitée contient environ 5% d'eau, 5% d'éthanol et 350% d'acide caprylique.

### 3) Phase liquide :

La phase liquide est composée du réactif, l'acide caprylique (fourni par "ALDRICH" marque déposée), et du catalyseur, le sel potassique de l'acide laurique. Les quantités de réactif et de catalyseur sont respectivement de 5 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes dans un four micro-onde de "PROLABO" (marque déposée), référencé "Synthewave 1000".

La densité de puissance micro-ondes appliquée est de 15 watts/cm³ pendant 10 minutes afin de porter le milieu réactionnel à une température de 195°C-puis elle est ensuite ajustée à 2,5 watts/cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le degré de substitution obtenu est de 0,17 et le rendement de récupération de la phase solide de 85%. Le taux de greffage est suffisant pour conférer au produit un caractère hydrophobe marqué. En effet, après dépôt d'une goutte d'eau sur le produit (mis sous forme de pastille par pressage), celle-ci reste à la surface même après plusieurs minutes alors qu'elle est immédiatement absorbée lorsqu'on la dépose sur la cellulose de départ.

### EXEMPLE 2 :

### 1) Phase solide - Pré-traitement :

La matière solide utilisée dans cet exemple est identique à celle de l'exemple 1 et subit un traitement préalable identique.

### 2) Phase liquide :

La phase liquide est composée du réactif, l'acide caprylique (fourni par "ALDRICH", marque déposée), et du catalyseur, le sel potassique de l'acide stéarique. Les quantités de réactif et de catalyseur sont respectivement de 10 moles et 10⁻² moles par équivalent OH de la cellulose.

Afin de favoriser l'homogénéité de cette phase liquide, le catalyseur solide est préalablement dispersé dans l'acide gras.

### 3) Réaction sous micro-ondes :

On met ensuite les phases solide et liquide en contact en agitant le milieu hétérogène que l'on soumet à une irradiation micro-ondes.

La densité de puissance micro-ondes appliquée est de 7,5 watts/cm³ pendant 10 minutes afin de porter le milieu réactionnel à une température de 195°C puis elle est ensuite ajustée à 1,3 watt/cm³ pendant 30 secondes afin de réaliser la réaction à cette température.

### 4) Résultats-analyses :

La phase solide est séparée du milieu réactionnel par filtration et nettoyage à l'éthanol. Elle est ensuite séchée à 105°C puis analysée.

Le degré de substitution obtenu est de 0,14 et le rendement de récupération de la phase solide de 94%. Le taux de greffage permet toujours de conférer au produit un caractère hydrophobe marqué.

### EXEMPLE 3 :

### 1) Phase solide :

La matière solide utilisée dans cet exemple est identique à celle de l'exemple 1.

### 2) Pré-traitement :

La cellulose ne subit aucun traitement préalable.

### 3) Phase liquide :

La phase liquide est composée du réactif, l'acide caprylique (fourni par "ALDRICH"), et du catalyseur, le sel potassique de l'acide stéarique. Les quantités de réactif et de catalyseur sont respectivement de 10 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes.

La densité de puissance micro-ondes appliquée est de 7,5 watts/cm³ pendant 10 minutes afin de porter le milieu réactionnel à une température de 195°C puis elle est ensuite ajustée à 1,3 watt/ cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le degré de substitution obtenu est de 0,06 et le rendement de récupération de la phase solide de 88%. Le taux de greffage, plus faible, confère au produit un caractère hydrophobe moins important. En effet, après dépôt d'une goutte d'eau sur le produit (mis sous forme de pastille par pressage), celle-ci est absorbée au bout de 5 minutes.

### EXEMPLE 4 :

### 1) Phase solide :

La matière solide utilisée dans cet exemple est de la cellulose (fournie par "SIGMA", marque déposée) ayant un degré de polymérisation (D.P.) de 980 et un taux d'humidité de 7%.

### 2) Pré-traitement :

La cellulose subit un traitement préalable identique à celui utilisé dans l'exemple 1.

### 3) Phase liquide :

La phase liquide est composée du réactif, l'acide caprylique (fourni par "ALDRICH", marque déposée), et du catalyseur, le sel potassique de l'acide laurique. Les quantités de réactif et de catalyseur sont respectivement de 8 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes.

La densité de puissance micro-ondes appliquée est de 7,5 watts/cm³ pendant 10 minutes afin de porter le milieu réactionnel à une température de 150°C puis elle est ensuite ajustée à 1,3 watt/cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le degré de substitution obtenu est de 0,05 et le rendement de récupération de la phase solide de 98%. Le taux de greffage, plus faible, confère au produit un caractère hydrophobe moins important. En effet, après dépôt d'une goutte d'eau sur le produit (mis sous forme de pastille par pressage), celle-ci est absorbée au bout de 3 minutes.

### EXEMPLE 5:

### 1) Phase solide :

La matière solide utilisée dans cet exemple est toujours de la cellulose.

### 2) Pré-traitement :

La cellulose subit un traitement préalable consistant à la mettre en présence d'un excès d'eau en vue de réaliser un gonflement des fibres, à déplacer l'eau absorbée par de l'éthanol puis à déplacer ensuite cet alcool au moyen de l'ester méthylique de l'acide laurique (le laurate de méthyle) identique à celui utilisé pour la réaction.

La cellulose ainsi traitée contient 5% d'eau, 5% d'éthanol et 350% de laurate de méthyle.

### 3) Phase liquide :

La phase liquide est composée du réactif, le laurate de méthyle (fourni par "FLUKA" marque déposée), et du catalyseur, le sel potassique de l'acide laurique. Les quantités de réactif et de catalyseur sont respectivement de 4,4 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes

La densité de puissance micro-ondes appliquée est de 7,5 watts/cm³ pendant 10 minutes afin de porter le milieu réactionnel à une température de 195°C puis elle est ensuite ajustée à 1,3 watt/cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le degré de substitution obtenu est de 0,11 et le rendement de récupération de la phase solide de 86%. Le taux de greffage permet de toujours de conférer au produit un caractère hydrophobe marqué.

### EXEMPLE 6 :

### 1) Phase solide :

La matière solide utilisée dans cet exemple est la même cellulose que celle de l'exemple 1.

### 2) Pré-traitement :

La cellulose subit un traitement préalable consistant à la mettre en présence d'un excès d'eau en vue de réaliser un gonflement des fibres, à déplacer l'eau absorbée par de l'éthanol puis à déplacer ensuite cet alcool au moyen de l'acide caprylique (acide octanoique ) identique à celui utilisé pour la réaction.

La cellulose ainsi traitée contient 5% d'eau, 5% d'éthanol et 350% d'acide caprylique.

### 3) Phase liquide :

La phase liquide est composée du réactif, l'acide caprylique (fourni par "ALDRICH", marque déposée), et du catalyseur le carbonate de potassium (K₂CO₃). Les quantités de réactif et de catalyseur sont respectivement de 8 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes.

La densité de puissance micro-ondes appliquée est de 7,5 watts/cm³ pendant 10 minutes afin de porter le milieu réactionnel à une température de 195°C puis elle est ensuite ajustée à 1,3 watt/cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le degré de substitution obtenu est de 0,14 et le rendement de récupération de la phase solide de 86%. Le taux de greffage permet toujours de conférer au produit un caractère hydrophobe marqué.

### EXEMPLE 7 :

### 1) Phase solide :

La matière solide utilisée dans cet exemple est de la sciure de sapin ayant un taux d'humidité de 20%.

### 2) Pré-traitement :

La sciure de sapin ne subit aucun pré-traitement préalable.

### 3) Phase liquide :

La phase liquide est composée du réactif, l'acide caprylique (fourni par "ALDRICH", marque déposée), et du catalyseur, le sel potassique de l'acide laurique. Les quantités de réactif et de catalyseur sont respectivement de 8 moles et 10⁻² moles par équivalent OH de la cellulose.

Afin de favoriser l'homogénéité de cette phase liquide, le catalyseur solide est préalablement dispersé dans l'acide gras.

### 4) Réaction sous micro-ondes :

On met ensuite les phases solide et liquide en contact en agitant le milieu hétérogène que l'on soumet à une irradiation micro-ondes.

La densité de puissance micro-ondes appliquée est de 7,5 watts/cm³ pendant 10 minutes afin de porter le milieu réactionnel à une température de 195°C puis elle est ensuite ajustée à 1,3 watt/cm³ pendant 5 minutes afin de réaliser la réaction à cette température.

### 5) Résultats-analyses :

La phase solide est séparée du milieu réactionnel par filtration et nettoyage à l'éthanol. Elle est ensuite séchée à 105°C puis analysée.

Le taux d'estérification obtenu est de 590 méq ester par équivalent OH de la cellulose et le rendement de récupération de la phase solide de 83%. Le taux de greffage obtenu permet de conférer au produit un caractère hydrophobe (après dépôt d'une goutte d'eau sur le produit, celle-ci reste à la surface même après plusieurs minutes).

### EXEMPLE 8 (APPLICATION) :

Du coton hydrophile a été traité selon le procédé de cette invention et plus particulièrement selon l'Exemple 1. Du coton hydrophile avant traitement (2 g) et du coton hydrophobe obtenu après réaction sous micro-ondes (2 g) ont été utilisés et leurs performances comparées pour l'absorption de l'huile végétale (40 g) se trouvant à la surface d'une grande quantité d'eau (1 L). Le coton hydrophobe a absorbé la totalité de l'huile sélectivement (0% d'eau) alors que le coton hydrophile a d'abord absorbé de l'huile puis cette dernière a été rapidement déplacée par l'eau faisant couler le coton hydrophile au fond du récipient limitant son absorption à 5 g d'huile et 45 g d'eau.

## Revendications

1. Procédé pour conférer un caractère hydrophobe à une matière solide cellulosique ou amylacée, dans lequel on greffe un corps gras sur les fonctions alcools de la matière en présence d'un catalyseur basique, **caractérisé en ce qu'**on réalise le greffage (a) en mettant la matière solide cellulosique ou amylacée en suspension dans une phase liquide composée d'un acide gras ou ester d'acide gras ayant un ou plusieurs groupements acyles possédant chacun au moins six atomes de carbone, (b) en agitant le milieu hétérogène en présence du catalyseur basique pour réaliser une mise en contact des phases, et (c) en soumettant le milieu hétérogène à une irradiation micro-ondes de façon à porter ledit milieu à une température comprise entre 150°C et 210°C pendant une durée comprise entre 30 secondes et 30 minutes.

2. Procédé selon la revendication 1, **caractérisé en ce qu'**on soumet le milieu à une irradiation micro-ondes telle que, dans une première phase, la densité de puissance absorbée soit au moins égale à 5 watts/cm³ afin de porter le milieu à la température de réaction précitée, et dans une seconde phase, la densité de puissance absorbée soit comprise entre 1 et 4 watts/cm³ au cours du déroulement de la réaction.

3. Procédé selon l'une des revendications 1 ou 2, dans lequel on utilise le catalyseur sous forme solide et on le mélange préalablement de façon homogène à l'acide gras ou à l'ester d'acide gras.

4. Procédé selon l'une des revendications 1, 2 ou 3, dans lequel on dispose dans le milieu hétérogène une quantité de catalyseur correspondant à une plage comprise entre 10⁻² et 10⁻⁴ mole de catalyseur par équivalent OH de matière cellulosique ou amylacée.

5. Procédé selon l'une des revendications 1 à 4, **caractérisé en ce qu'**on utilise comme catalyseur un carboxylate.

6. Procédé selon l'une des revendications 1 à 5, **caractérisé en ce que** l'on met la matière solide cellulosique ou amylacée en suspension dans la phase liquide dans une proportion correspondant à une plage sensiblement comprise entre 3 et 15 moles d'acide gras ou ester d'acide gras par équivalent OH de matière cellulosique ou amylacée.

7. Procédé selon l'une des revendications 1 à 6, pour réaliser une hydrophobation par estérification, **caractérisé en ce qu'**on utilise un acide gras saturé ou un mélange d'acides gras saturés ayant entre 8 et 12 atomes de carbone.

8. Procédé selon l'une des revendications 1 à 6, pour réaliser une hydrophobation par transestérification, dans lequel on utilise un ou des esters d'acides gras du groupe suivant : méthyl octanoate, méthyl décanoate, méthyl dodécanoate, méthyl tétradécanoate, méthyl hexadécanoate, méthyl octadécanoate, huiles végétales en particulier coprah ou palmiste.

9. Procédé selon l'une des revendications 1 à 8 pour conférer un caractère hydrophobe à une matière solide cellulosique, **caractérisé en ce que**, préalablement, on met la matière cellulosique en présence d'un excès d'eau en vue de réaliser un gonflement des fibres, on déplace l'eau absorbée au moyen d'un alcool, et on déplace ensuite l'alcool au moyen d'un acide gras ou ester d'acide gras identique à celui utilisé pour la réaction.

10. Procédé selon l'une des revendications 1 à 9, **caractérisé en ce qu'**on soumet le milieu hétérogène à une irradiation micro-ondes de façon à le porter à une température comprise entre 180°C et 195°C pendant une durée comprise entre 5 et 10 minutes.

11. Procédé selon l'une des revendications 1 à 10, appliqué pour conférer un caractère hydrophobe à une matière solide cellulosique ou amylacée ayant une teneur en humidité comprise entre 1,7.10⁻² et 7.10⁻² g d'eau par g de matière sèche.

## Patentansprüche

1. Verfahren zur Hydrophobierung von festem Cellulose- oder Stärkematerial, bei dem ein Fettkörper an die Alkoholgruppen des Materials in Anwesenheit eines basischen Katalysators gepfropft wird, **dadurch gekennzeichnet, dass** das Anpfropfen a) durch Suspendieren des festen Cellulose- oder Stärkematerials in einer Flüssigphase bestehend aus einer Fettsäure oder einem Fettsäureester mit einer oder mehreren Acylgruppen mit jeweils wenigstens sechs Kohlenstoffatomen, b) durch Rühren des heterogenen Mediums in Anwesenheit des basischen Katalysators zum Inkontaktbringen der Phasen, und c) durch Mikrowellenbestrahlung durchgeführt wird, um das genannte Medium für eine Dauer von 30 Sekunden bis 30 Minuten auf eine Temperatur zwischen 150°C und 210°C zu bringen.

2. Verfahren nach Anspruch 1, **dadurch gekennzeichnet, dass** das Medium einer Mikrowellenbestrahlung ausgesetzt wird, so dass in einer ersten Phase die Dichte der absorbierten Leistung wenigstens 5 Watt/cm³ beträgt, um das Medium auf die oben erwähnte Reaktionstemperatur zu bringen, und in einer zweiten Phase die Dichte der absorbierten Leistung für die Dauer des Ablaufs der Reaktion zwischen 1 und 4 Watt/cm³ liegt.

3. Verfahren nach Anspruch 1 oder 2, bei dem der Katalysator in fester Form verwendet und mit der Fettsäure oder dem Fettsäureester zuvor homogen vermischt wird.

4. Verfahren nach Anspruch 1, 2 oder 3, bei dem in das heterogene Medium eine Katalysatormenge gegeben wird, die einem Bereich von 10⁻² bis 10⁻⁴ Mol Katalysator pro OH-Äquivalent des Cellulose- oder Stärkematerials entspricht.

5. Verfahren nach einem der Ansprüche 1 bis 4, **dadurch gekennzeichnet, dass** als Katalysator ein Carboxylat verwendet wird.

6. Verfahren nach einem der Ansprüche 1 bis 5, **dadurch gekennzeichnet, dass** das Cellulose- oder Stärkematerial in einem Anteil in der Flüssigphase suspendiert wird, der einem Bereich im Wesentlichen von 3 bis 15 Mol Fettsäure oder Fettsäureester pro OH-Äquivalent des Cellulose- oder Stärkematerials entspricht.

7. Verfahren nach einem der Ansprüche 1 bis 6 zum Durchführen einer Hydrophobierung durch Veresterung, **dadurch gekennzeichnet, dass** eine gesättigte Fettsäure oder ein Gemisch aus gesättigten Fettsäuren mit 8 bis 12 Kohlenstoffatomen verwendet wird.

8. Verfahren nach einem der Ansprüche 1 bis 6 zum Durchführen einer Hydrophobierung durch Transveresterung, bei dem ein oder mehrere Fettsäureester der folgenden Gruppe verwendet wird/werden: Methyloctanoat, Methyldecanoat, Methyldodecanoat, Methyltetradecanoat, Methylhexadecanoat, Methyloctadecanoat, Pflanzenöle, insbesondere Kopra oder Palmiste.

9. Verfahren nach einem der Ansprüche 1 bis 8 zum Hydrophobieren eines festen Cellulosematerials, **dadurch gekennzeichnet, dass** das feste Cellulosematerial zuvor mit einem Wasserüberschuss in Kontakt gebracht wird, um die Fasern aufzuquellen, das absorbierte Wasser mit Alkohol entfernt und dann der Alkohol mit einer Fettsäure oder einem Fettsäureester entfernt wird, der mit der/dem für die Reaktion verwendeten identisch ist.

10. Verfahren nach einem der Ansprüche 1 bis 9, **dadurch gekennzeichnet, dass** das heterogene Medium einer Mikrowellenbestrahlung ausgesetzt wird, um es für eine Dauer von 5 bis 10 Minuten auf eine Temperatur zwischen 180°C und 195°C zu bringen.

11. Verfahren nach einem der Ansprüche 1 bis 10, angewendet zur Hydrophobierung eines festen Cellulose- oder Stärkematerials mit einem Feuchtigkeitsgehalt zwischen 1,7 x 10⁻² und 7 x 10⁻² Gramm Wasser pro Gramm Trockenmasse.

## Claims

1. Process for giving a hydrophobic nature to a cellulosic or starchy solid material, in which a fatty substance is grafted onto the alcohol functions of the material in the presence of a basic catalyst, **characterized in that** the grafting is performed (a) by placing the cellulosic or starchy solid material in suspension in a liquid phase composed of a fatty acid or fatty acid ester having one or more acyl groups each containing at least six carbon atoms, (b) by stirring the heterogeneous medium in the presence of the basic catalyst in order to bring the phases into contact, and (c) by subjecting the heterogeneous medium to microwave radiation so as to bring the said medium to a temperature of between 150°C and 210°C for a period of between 30 seconds and 30 minutes.

2. Process according to Claim 1, **characterized in that** the medium is subjected to microwave radiation such that, in a first stage, the absorbed power density is at least equal to 5 watts/cm³ in order to bring the medium to the abovementioned reaction temperature, and, in a second stage, the absorbed power density is between 1 and 4 watts/cm³ during the course of the reaction.

3. Process according to either of Claims 1 and 2, in which the catalyst is used in solid form and it is homogeneously premixed with the fatty acid or the fatty acid ester.

4. Process according to one of Claims 1, 2 and 3, in which an amount of catalyst corresponding to a range of between 10⁻² and 10⁻⁴ mol of catalyst per OH equivalent of cellulosic or starchy material is placed in the heterogeneous medium.

5. Process according to one of Claims 1 to 4, **characterized in that** a carboxylate is used as catalyst.

6. Process according to one of Claims 1 to 5, **characterized in that** the cellulosic or starchy solid material is placed in suspension in the liquid phase in a proportion corresponding to a range substantially between 3 and 15 mol of fatty acid or fatty acid ester per OH equivalent of cellulosic or starchy material.

7. Process according to one of Claims 1 to 6, for performing a hydrophobation by esterification, **characterized in that** a saturated fatty acid or a mixture of saturated fatty acids containing between 8 and 12 carbon atoms is used.

8. Process according to one of Claims 1 to 6, for performing a hydrophobation by transesterification, in which one or more fatty acid esters from the following group is (are) used: methyl octanoate, methyl decanoate, methyl dodecanoate, methyl tetradecanoate, methyl hexadecanoate, methyl octadecanoate, plant oils, in particular coconut oil or palm kernel oil.

9. Process according to one of Claims 1 to 8, for giving a hydrophobic nature to a cellulosic solid material, **characterized in that** the cellulosic material is placed in contact beforehand with an excess of water in order to swell the fibres, the absorbed water is displaced by means of an alcohol, and the alcohol is then displaced by means of a fatty acid or fatty acid ester identical to the one used for the reaction.

10. Process according to one of Claims 1 to 9, **characterized in that** the heterogeneous medium is subjected to microwave radiation so as to bring it to a temperature of between 180°C and 195°C for a period of between 5 and 10 minutes.

11. Process according to one of Claims 1 to 10, applied to give a hydrophobic nature to a cellulosic or starchy solid material having moisture content of between 1.7×10⁻² and 7×10⁻² g of water per g of solids.
